# EUROPEAN PATENT APPLICATION

(11) **EP 3 540 116 A1**
(43) Date of publication of application: **18.09.2019**
(21) Application number: 17832983.5
(22) Date of filing: 07.11.2017
(51) Int. Cl.: D21C 1/02, D21C 9/10, D21C 9/16, D01C 1/02, D21H 11/12

(54) **METHOD FOR PRODUCING PURIFIED CELLULOSE FROM FLAX FIBRE**

(30) Priority: 08.11.2016 RU 2016143772
(71) Applicant: Nabatov, Sergey, 14193 Berlin (DE)
(72) Inventor: Nabatov, Sergey, 14193 Berlin (DE)
(74) Representative: Gulde & Partner
(86) International application number: PCT/IB2017/056948
(87) International publication number: WO 2018/087658

(57) **Abstract**

The invention relates to the chemical industry, specifically to technology for producing refined cellulose from flax.

The essence of the invention consists of the fact that during the refining process of the flax fibre using a chemical method, liquid processing for breaking down accompanying additives is conducted in hot water at a constant water temperature of 98-100 °C for 30 minutes; the temperature of the water and the value of the silicate module during the oxidative processing and brewing are maintained at a constant level. In addition, multi-stage processing and the use of acid is excluded due to the high content of hydrogen peroxide in the solutions for oxidative processing and brewing, and as a result ensures an increase in the productivity of the equipment, while simultaneously lowering the amount of harmful emissions with regard to the products arising during the processing of flax fibre using mineral acidic solution. This constitutes the technical achievement of the invention. Table 1

## Description

The invention relates to the chemical industry, specifically to technology for producing refined cellulose from flax.

A method for refining flax fibre is known [patent RF No.2347861, published 27.02.2009], consisting of loosening and simultaneous shortening of the fibre and the separation of heavy parts, with the fibre being affected by the centrifugal air flow, with the separation of heavy parts by means of the simultaneous effect of the centrifugal air flow, and the multiple impact effect with the use of rotating drums at their rotation speed of 700-1200 rpm, after which a repeated loosening is conducted, with simultaneous shortening of the fibre up to an average length of 35-55 mm with repeated separation of heavy parts with the simultaneous effect of the centrifugal flow of air and multiple impact effect with the use of rotating drums.

The disadvantage of this method is that with the given method, the objective is neither set nor achieved of bleaching flax fibre for its subsequent use in the production of wadding.

A method for producing linen wadding is known [patent RF No.2501895, published 20.12.2013], including the preparation of fibre, its mechanical processing, bleaching with the use of a chemical solution, rinsing, pressing and drying and the formation of a strip, which is processed using a chemical solution with subsequent rinsing, pressing and drying, and the dry, bleached strip is treated in a mechanical process by means of deformation to form a winding, with continuous winding on both sides, with the end parts of the strip fastened and final refining of the short staple fibres made of non-fibrous additives formed through mechanical processing.

The disadvantage of this method is the increase in the complexity of the technological equipment as a result of the necessity of realising the double-sided continuous winding with the fastening of the end parts of the strip, resulting in increased financial expenditure on the equipment and a greater effort expended on the production.

The closest method in its essence is the method of obtaining highly refined cellulose from flax [patent RF No.2554589, published 27.06.2015], consisting of processing with a solution containing a mineral oxidising agent for breaking down accompanying additives, rinsing away the products of the breaking down process, oxidative processing of the alkaline solution hydrogen peroxide, addition of a stabilising agent, rinsing with water, and processing with an aqueous solution of acetic acid; also, the processing of the solution for the breakdown of accompanying additives and subsequent rinsing are conducted at a temperature of 25-30 °C for 25-30 minutes; the oxidative processing is conducted in stages with different values of the silicate-alkaline module, starting at a temperature of 20-25 °C with module 0.5-0.6 over a period of 10-15 minutes, then with module 0.8-0.9 over a period of 10-20 minutes, then with module 1.0-1.1 over a period of 30-60 minutes at a temperature of 70-75 °C, after which the temperature is increased to 96-98 °C and is maintained for a period of 30-60 minutes, before the module is decreased to 0.1-0.2 and the heat is continued for 50-60 minutes, and before processing with aqueous solution of acetic acid, an additional oxidative process is conducted with the alkaline solution hydrogen peroxide at a temperature of 96-98 °C for a period of 50-60 minutes with subsequent rinsing with water, whereby the alkaline solution of hydrogen peroxide contains a stabilising agent in both stages of the oxidative process-a silicate or sodium metal silicate; in addition, the solution for the oxidative process contains components with the following ratio (g/l):
- Hydrogen peroxide (converted to active oxygen) - 2.0-3.5
- Silicate or sodium metal silicate (converted to SiO₂) - 1.8-5.6
- Calcified and/or caustic soda
- Up to overall alkalisation - 20.0-50.0.

In addition, the solution for the additional oxidative process contains components with the following ratio (g/l):
- Hydrogen peroxide (converted to active oxygen) - 0.7-1.5
- Silicate or sodium metal silicate (converted to SiO₂) - 1.4-2.5
- Calcified and/or caustic soda
- Up to overall alkalisation - 3.0-5.0

This method is the generic method.

The method has the following disadvantages:
1. The use of a mineral acidic solution for the prior addition of the additive, which increases the quantity of harmful production emissions.
2. The necessity of changing the temperature, liquid and silicate module during chemical processing of the flax fibre, which with insufficient automation of the technology reduces the productivity of the equipment.

The object of the invention is to increase the productivity of the equipment, while simultaneously lowering the quantity of harmful emissions from production with regard to the products from the processing of flax fibre using a mineral acidic solution.

The assigned task is achieved through the method of producing linen bleached fibre from flax, consisting of mechanical processing, liquid processing for breaking down the accompanying additives, rinsing with warm water, oxidative processing with an alkaline solution of hydrogen peroxide containing a stabilising agent, a first rinsing with hot water, oxidative brewing, a second rinsing with hot and warm water, extraction of moisture in the centrifuge, **in accordance with the invention,** liquid processing for the purpose of breaking down the accompanying additives is conducted in hot water at a constant water temperature of 98-100 °C for 30 minutes, oxidative processing and brewing are realised under constant silicate module values and constant solution temperature values of 98-100 °C.

**In addition,** the solution for oxidative processing contains components in the following ratios (g/l):
- Hydrogen peroxide - 16-18
- Sodium metal silicate - 4-5
- Complex-forming compound - 1.5-1.7
- Surface-active substances - 2.7-2.9
- Magnesium sulphate - 0.18-0.22
- Caustic soda - 1.18-1.22.

**In addition,** the solution for the oxidative brewing process contains components in the following ratio (g/l):
- Hydrogen peroxide - 31-32
- Sodium metal silicate - 7-9
- Complex-forming compound - 3.0-3.3
- Surface-active substances - 2.7-2.9
- Magnesium sulphate - 0.19-0.21
- Caustic soda - 3.1-3.3.

The essence of the invention consists of the fact that during the refining process of the flax fibre using a chemical method, liquid processing for breaking down accompanying additives is conducted in hot water at a constant water temperature of 98-100 °C for 30 minutes; the temperature of the water and the value of the silicate module during the oxidative process and brewing are maintained at a constant level; in addition, multi-stage processing and the use of acid is excluded due to the high content of hydrogen peroxide in the solutions for oxidative processing and brewing, and as a result it ensures an increase in the productivity of the equipment while at the same time lowering the amount of harmful emissions with regard to the products arising during the processing of flax fibre using mineral acidic solution.

An example of a specific practical realisation of the method according to the invention will now be described below.

The original material used is flax straw, which is dried until it reaches the required humidity and enters a braking-swingling aggregate and a short flax fibre aggregate, where the hemp hurds are removed from the fibre. Further purified of the hemp hurds, the fibre is exposed to preliminary liquid removal of additives by means of hot water processing with a temperature of t=98÷100 °C for a period of 30 minutes, rinsing with warm water at a temperature of t=58÷62 °C for a period of 30 minutes. Then, the oxidative brewing is conducted for 90 minutes in the solution, which contains the following components (g/l):
- Hydrogen peroxide - 16-18
- Sodium metal silicate - 4-5
- Complex-forming compound - 1.5-1.7
- Surface-active substances - 2.7-2.9
- Magnesium sulphate - 0.18-0.22
- Caustic soda - 1.18-1.22.

Then the fibre is rinsed with hot water at a temperature of t=80° C for a period of 30 minutes.

Then the oxidative brewing is realised at a temperature of 98÷100° C for a period of 90 minutes in the solution, which contains the following components (g/l):
- Hydrogen peroxide - 31-32
- Sodium metal silicate - 7-9
- Complex-forming compound - 3.0-3.3
- Surface-active substances - 2.7-2.9
- Magnesium sulphate - 0.19-0.21
- Caustic soda - 3.1-3.3.

The fibre is then rinsed with hot water at a temperature of t=80 °C for a period of 40 minutes.

Further, the rinse with warm water is conducted at a temperature of t=60 °C with the addition of surface-active substances for a period of 40 minutes, and drying is conducted in the centrifuge.

The properties of the refined cellulose obtained using such a method are presented in Table 1:

**Table 1 - Properties of the refined cellulose**

| Property | Property value | Standard as per GOST 595 |
|---|---|---|
| Content of alpha-cellulose % | 98.2 | 96.0-99.0 |
| Moisture g | 150 | 110-150 |
| Quantity of additives containing lignin % | 0.2 | 0.1-0.5 |
| Degree of polymerisation of the cellulose | 1100 | 1000-1500 |

## Claims

1. A method for producing bleached flax fibre from flax, consisting of the mechanical processing, liquid processing for the breakdown of accompanying additives, rinsing with warm water, oxidative processing with alkaline solution of hydrogen peroxide containing a stabilising agent, a first rinsing with hot water, oxidative brewing, a second rinsing with hot and warm water, and drying in the centrifuge, **characterized in that** the liquid processing for breaking down the accompanying additives is conducted in hot water at a constant water temperature of 98-100 °C for a period of 30 minutes, the oxidative processing and brewing are realised at a constant silicate module value and constant solution temperature value of 98-100 °C.

2. **The method according to Claim** 1, **characterized in that** the solution for the oxidation process contains components with the following ratio (g/l):
- Hydrogen peroxide - 16-18
- Sodium metal silicate - 4-5
- Complex-forming compound - 1.5-1.7
- Surface-active substances - 2.7-2.9
- Magnesium sulphate - 0.18-0.22
- Caustic soda - 1.18-1.22.

3. **The method according to claim 1, characterized in that** the solution for the oxidation brew contains components with the following ratio (g/l):
- Hydrogen peroxide - 31-32
- Sodium metal silicate - 7-9
- Complex-forming compound - 3.0-3.3
- Surface-active substances - 2.7-2.9
- Magnesium sulphate - 0.19-0.21
- Caustic soda - 3.1-3.3.
